# EUROPEAN PATENT APPLICATION

(11) **EP 4 507 435 A1**
(43) Date of publication of application: **12.02.2025**
(21) Application number: 23784658.9
(22) Date of filing: 27.03.2023
(51) Int. Cl.: H04W 72/12, H04W 88/08, H04W 92/16

(54) **NETWORK NODE AND COMMUNICATION METHOD**

(30) Priority: 07.04.2022 JP 2022064002
(71) Applicant: NTT DOCOMO, INC., Tokyo 100-6150 (JP)
(72) Inventor: MINOKUCHI, Atsushi, Tokyo 100-6150 (JP); MUTIKAINEN, Jari, 80687 Munich (DE)
(74) Representative: Hoffmann Eitle
(86) International application number: PCT/JP2023/012135
(87) International publication number: WO 2023/195368

(57) **Abstract**

A network node includes: a transmitting unit configured to transmit scheduling support information to an access and mobility management function (AMF); and a receiving unit configured to receive, from the AMF, wireless-side scheduling information generated by a next generation Node B Distributed Unit (gNB-DU) based on the scheduling support information, in which the transmitting unit transmits the wireless-side scheduling information and information for identifying traffic to which the wireless-side scheduling information is applied to a transport network installed between a user plane function (UPF) and a next generation Node B-Central Unit-User Plane (gNB-CU-UP) in a data transmission path.

## Description

### Technical Field

The present invention relates to a network node and a communication method in a wireless communication system.

### Background Art

In New Radio (NR) (also referred to as "5G"), which is a succeeding system of Long Term Evolution (LTE), a technology that satisfies a largecapacity system, a high-speed data transmission speed, a low delay, simultaneous connection of a large number of terminals, a low cost, power saving, and the like as requirement conditions has been studied (for example, Non Patent Literature 1).

In the existing specification in the NR network, when a Time-Sensitive Networking (TSN) function is enabled, a Central Network Controller (CNC) transmits scheduling support information to a Session Management function (SMF) via a TSN-Application Function (AF) and a Policy Control Function (PCF). The SMF transmits the scheduling support information to a next generation Node-B (gNB) as Time-Sensitive Communication Assistance Information (TSCAI). The gNB refers to the scheduling support information, and appropriately determines scheduling of communication of the radio part by using a configured grant (UL) in a case of UL and semi-persistent scheduling (DL) in a case of DL.

### Citation List

### Non Patent Literature

Non Patent Literature 1: 3GPP TS 38.300 V16.4.0 (2020-12)
Non Patent Literature 2: IEEE 802.1Q 8.6.5.1

### Summary of Invention

### Technical Problem

On the other hand, in the NR network, scheduling of a transmission path between a gNB-Remote Unit (gNB-RU) and a gNB-Distributed Unit (gNB-DU), a transmission path between the gNB-DU and a gNB-Central Unit-User Plane (gNB-CU-UP), and a transmission path between the gNB-CU-UP and a user plane function (UPF) cannot be controlled on the basis of information from the CNC.

The present invention has been made in view of the above points, and an object thereof is to improve use efficiency of a user data transmission path in a wireless communication system.

### Solution to Problem

According to the disclosed technology, provided is a network node including: a transmitting unit configured to transmit scheduling support information to an access and mobility management function (AMF); and a receiving unit configured to receive, from the AMF, wireless-side scheduling information generated by a next generation Node B Distributed Unit (gNB-DU) based on the scheduling support information, in which the transmitting unit transmits the wireless-side scheduling information and information for identifying traffic to which the wireless-side scheduling information is applied to a transport network installed between a user plane function (UPF) and a next generation Node B-Central Unit-User Plane (gNB-CU-UP) in a data transmission path.

### Advantageous Effects of Invention

According to the disclosed technology, the use efficiency of a user data transmission path can be improved in a wireless communication system.

### Brief Description of Drawings

[Fig. 1] Fig. 1 is a diagram illustrating an example of a communication system.
[Fig. 2] Fig. 2 is a diagram illustrating an example (1) of a network configuration according to an embodiment of the present invention.
[Fig. 3] Fig. 3 is a diagram illustrating an example of a transmission path according to the embodiment of the present invention.
[Fig. 4] Fig. 4 is a sequence diagram illustrating an example (1) of PDU session establishment according to the embodiment of the present invention.
[Fig. 5] Fig. 5 is a sequence diagram illustrating an example (2) of PDU session establishment according to the embodiment of the present invention.
[Fig. 6] Fig. 6 is a sequence diagram illustrating an example (3) of PDU session establishment according to the embodiment of the present invention.
[Fig. 7] Fig. 7 is a sequence diagram illustrating an example (4) of PDU session establishment according to the embodiment of the present invention.
[Fig. 8] Fig. 8 is a sequence diagram illustrating an example (5) of PDU session establishment according to the embodiment of the present invention.
[Fig. 9] Fig. 9 is a diagram illustrating an example (2) of a network configuration according to the embodiment of the present invention.
[Fig. 10] Fig. 10 is a diagram illustrating an example of a functional configuration of a base station 10 according to the embodiment of the present invention.
[Fig. 11] Fig. 11 is a diagram illustrating an example of a functional configuration of a terminal 20 according to the embodiment of the present invention.
[Fig. 12] Fig. 12 is a diagram illustrating an example of a hardware configuration of the base station 10 or the terminal 20 according to the embodiment of the present invention.

### Description of Embodiments

Hereinafter, embodiments of the present invention will be described with reference to the drawings. Note that the embodiments described below are examples, and an embodiment to which the present invention is applied is not limited to the following embodiments.

In the operation of a wireless communication system of an embodiment of the present invention, an existing technology is appropriately used. Herein, the existing technology is, for example, existing LTE, but is not limited to the existing LTE. In addition, the term "LTE" used in the present specification has a broad meaning including LTE-Advanced and LTE-Advanced or later systems (for example, NR) unless otherwise specified.

Furthermore, in the embodiment of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in the existing LTE are used. This is for convenience of description, and similar signals, functions, and the like may be referred to by other names. In addition, the above-described terms in NR correspond to NR-SS, NR-PSS, NR-SSS, NR-PBCH, NR-PRACH, NR-PDCCH, NR-PDSCH, NR-PUCCH, NR-PUSCH, and the like. However, a signal used for NR is not necessarily specified as "NR-".

In the exemplary embodiment of the present invention, the duplex system may be a time division duplex (TDD) system, a frequency division duplex (FDD) system, or other (for example, flexible duplex or the like) systems.

In addition, in the embodiment of the present invention, "configure" a wireless parameter and the like may mean that a predetermined value is pre-configured, or that a wireless parameter notified from a base station 10 or a terminal 20 is configured.

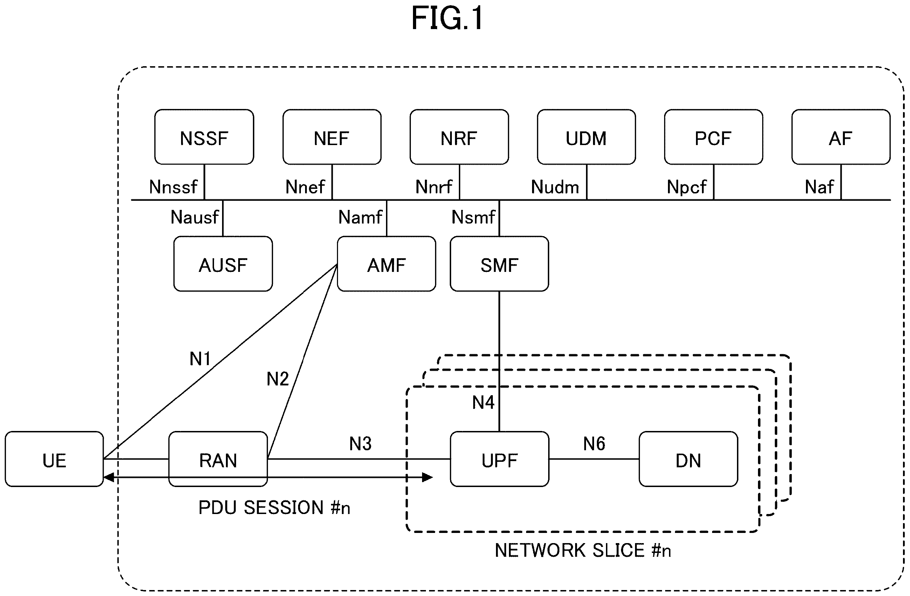

Fig. 1 is a diagram illustrating an example of a communication system. As illustrated in Fig. 1, the communication system includes UE that is a terminal 20 and a plurality of network nodes 30. Hereinafter, it is assumed that one network node 30 corresponds to each function, but a plurality of functions may be implemented by one network node 30, or a plurality of network nodes 30 may implement one function. The "connection" described below may be a logical connection or a physical connection.

A radio access network (RAN) is a network node 30 having a radio access function, may include a base station 10, and is connected to the UE, an access and mobility management function (AMF), and a user plane function (UPF). The AMF is a network node 30 having functions such as termination of a RAN interface, termination of non-access stratum (NAS), registration management, connection management, reachability management, and mobility management. The UPF is a network node 30 having functions such as a protocol data unit (PDU) session point for the outside interconnecting with a data network (DN), packet routing and forwarding, and user plane quality of service (QoS) handling. The UPF and the DN constitute a network slice. In the wireless communication network in the embodiment of the present invention, a plurality of network slices is constructed.

The AMF is connected to the UE, the RAN, a session management function (SMF), a network slice selection function (NSSF), a network exposure function (NEF), a network repository function (NRF), a unified data management (UDM), an authentication server function (AUSF), a policy control function (PCF), and an application function (AF). The AMF, the SMF, the NSSF, the NEF, the NRF, the UDM, the AUSF, the PCF, and the AF are network nodes 30 that are connected to each other through respective service-based interfaces, Namf, Nsmf, Nnssf, Nnef, Nnrf, Nudm, Nausf, Npcf, and Naf.

The SMF is a network node 30 having functions such as session management, internet protocol (IP) address allocation and management of the UE, a dynamic host configuration protocol (DHCP) function, an address resolution protocol (ARP) proxy, and a roaming function. The NEF is a network node 30 having a function of notifying another network function (NF) of capability and an event. The NSSF is a network node 30 having functions such as selecting a network slice to which the UE is to be connected, determining NSSAI (Network Slice Selection Assistance Information) to be allowed, determining NSSAI to be configured, and determining an AMF set to which the UE is to be connected. The PCF is a network node 30 having a function of controlling the policy of the network. The AF is a network node 30 having a function of controlling an application server. The NRF is a network node 30 having a function of discovering an NF instance that provides a service. The UDM is a network node 30 that manages subscriber data and authentication data. The UDM is connected to a user data repository (UDR) that holds the data.

In the existing specification in the NR network, there is an implicit assumption that a mobile communication operator corresponding to a Public Land Mobile Network (PLMN) that owns a next generation Node B-Distributed Unit (gNB-DU), a next generation Node B-Central Unit-User Plane (gNB-CU-UP), and a user plane function (UPF) owns user data transmission paths between the gNB-DU and the gNB-CU-UP and between the gNB-CU-UP and the UPF. In addition, notification of traffic characteristics to a transmission path is also performed only by a differentiated services code point (DSCP) value.

That is, in the existing specification in the NR network, there is no concept of a transmission network operator, there is no method in which the transmission network operator accepts traffic from a plurality of PLMNs for each call, and it is not possible to use a transmission path that acquires a traffic characteristic by an off-path.

Therefore, each part of a transmission path is configured to be regarded as one UPF (hereinafter, referred to as a "transport") from the outside. The transport may operate as one network node, or the transport may be further configured of a plurality of network nodes.

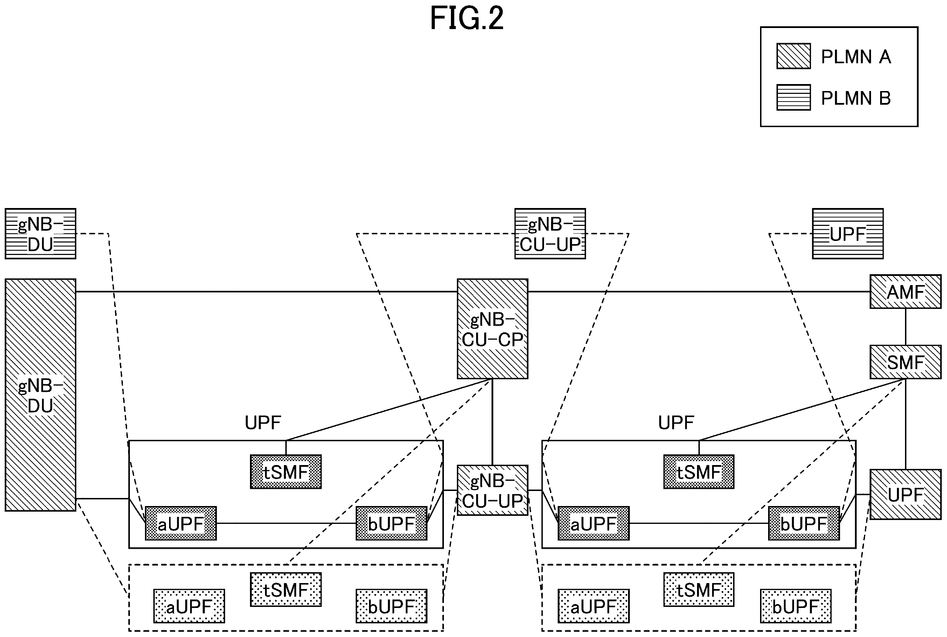

Fig. 2 is a diagram illustrating an example (1) of a network configuration according to the embodiment of the present invention. As illustrated in Fig. 2, it is assumed that a next generation Node B-Central Unit-Control Plane (gNB-CU-CP) can set a transport between a gNB-DU and a gNB-CU-UP. In addition, it is assumed that a SMF can set a transport between the gNB-CU-UP and a UPF.

As illustrated in Fig. 2, a transport is composed of 3 parts of 1) to 3) shown below.

1) A part that manages a tunnel endpoint identifier (TEID) and loads a traffic characteristic inside the transport in response to an instruction from the gNB-CU-CP or the SMF. Hereinafter, it is referred to as "tSMF".
2) A part positioned on an edge side as a transmission path. Hereinafter, it is referred to as "aUPF".
3) A part positioned on a center side as a transmission path. Hereinafter, it is referred to as "bUPF".

As illustrated in Fig. 2, a gNB-DU, a gNB-CU-UP, and a UPF in a certain PLMN and a gNB-DU, a gNB-CU-UP, and a UPF in other PLMNs can be connected to the transport.

The request source PLMN can be distinguished by an instruction transmitted from the gNB-CU-CP or the SMF to the transport. In addition, an instruction to be transmitted from the gNB-CU-CP to the gNB-CU-UP or an instruction to be transmitted from the SMF to the UPF includes an existing network instance. The network instance is assumed to be newly encoded with a transmission network operator name that provides a transport and a transmission service type provided by the transmission network operator.

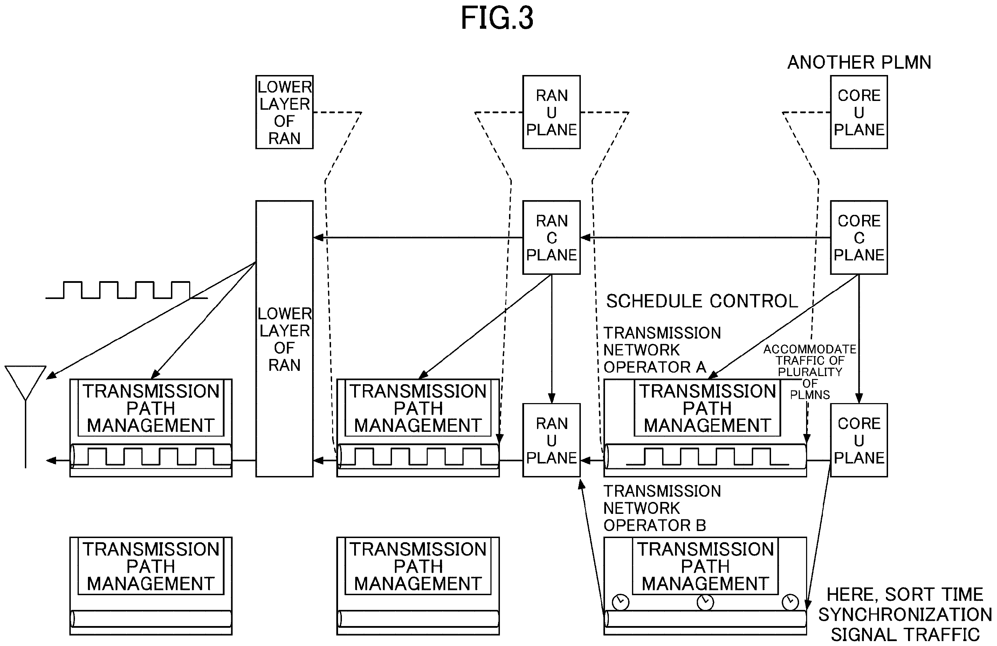

Fig. 3 is a diagram illustrating an example of a transmission path according to the embodiment of the present invention. In Fig. 3, transports correspond to a transmission path between a core U plane and a RAN U plane and a transmission path between the RAN U plane and a lower layer of a RAN. As illustrated in Fig. 3, a certain PLMN and another PLMN can use a transport provided by the same transmission network operator.

Further, a certain PLMN may use a plurality of transports provided by a plurality of transmission network operators. For example, as illustrated in Fig. 3, a transport provided by the transmission network operator B accommodates time synchronization signal traffic of a certain PLMN.

Here, in the existing specification in the NR network, when a Time-Sensitive Networking (TSN) function is enabled, a Central Network Controller (CNC) transmits scheduling support information to a Session Management function (SMF) via a TSN-Application Function (AF) and a Policy Control Function (PCF). The SMF transmits the scheduling support information to a next generation Node-B (gNB) as Time-Sensitive Communication Assistance Information (TSCAI). The gNB refers to the scheduling information, and appropriately determines scheduling of communication of the radio part by using a configured grant (UL) in a case of UL and semi-persistent scheduling (DL) in a case of DL.

On the other hand, in the NR network, scheduling of a transmission path between a gNB-Remote Unit (gNB-RU) and a gNB-Distributed Unit (gNB-DU), a transmission path between the gNB-DU and a gNB-Central Unit-User Plane (gNB-CU-UP), and a transmission path between the gNB-CU-UP and a user plane function (UPF) cannot be controlled on the basis of information from the CNC. Therefore, for example, in the case of a transmission path in which transmission is performed in a time division manner, an unnecessary wait occurs between a wireless part and a wired part, and a delay occurs.

The communication procedure in the embodiments of the present invention may be executed as A) to E) shown below.

A) During PDU session establishment, the SMF sets an appropriate network instance value based on, for example, Single-Network Slice Selection Assistance Information (S-NSSAI) and a Data Network Name (DNN). The SMF selects an appropriate UPF and provides notification of the network instance value. The UPF selects an appropriate interface. The interface may be a TEID. The SMF selects an appropriate transport installed between the UPF and the gNB-CU-UP, and notifies the tSMF of the request source PLMN information. The tSMF configures an interface for the PLMN in the aUPF and the bUPF, and responds to the SMF.
B) The SMF notifies the gNB-CU-CP of the network instance value. The gNB-CU-CP selects an appropriate gNB-CU-UP and provides notification of the network instance value. The gNB-CU-UP selects an appropriate interface. The interface may be a TEID. The gNB-CU-CP selects an appropriate transport installed between the gNB-CU-UP and the gNB-DU, and notifies the tSMF of request source PLMN information. The tSMF configures an interface for the PLMN in the aUPF and the bUPF, and responds to the gNB-CU-CP.
C) The gNB-CU-CP configures a UL interface of the gNB-DU. At this time, in the gNB-DU, an internal medium access control (MAC) function may fix the schedule in order to obtain the schedule support information. The gNB-DU may notify a node that manages a transmission path between the gNB-DU and the gNB-CU (for example, an optical line terminal (OLT) in the case of a passive optical network (PON)) of the determined traffic characteristic.
D) The gNB-CU-CP configures a DL interface of a transport installed between the gNB-CU-UP and the gNB-DU. At this time, the SMF may notify the transport of the traffic characteristic for which the MAC function of the gNB-DU is determined.
E) The SMF configures a DL interface for a transport installed between the UPF and the gNB-CU-UP. At this time, the SMF may notify the transport of the traffic characteristic for which the MAC function of the gNB-DU is determined.

Further, the communication procedure in the embodiments of the present invention may be executed as 1) to 10) shown below. The communication procedures of A) to E) above and the communication procedures of 1) to 10) described below may be executed in parallel.

1) The CNC determines a traffic pattern. The traffic pattern may be, for example, a definition of a stream and a gate opening/closing timing at a 5G system (5GS) bridge entrance/exit for each stream. The CNC notifies the SMF of the traffic pattern via the TSN-AF and the PCF.
2) The SMF configures the TSCAI on the basis of the traffic pattern and notifies the RAN of the TSCAI.
3) The RAN (specifically, the MAC function of the gNB-DU) determines scheduling of the wireless communication part.
4) The gNB-DU notifies a management node (for example, an OLT in the case of a PON) of a transmission path between the gNB-RU and the gNB-DU of the determined wireless communication schedule. In addition, in order to support various wired transmission technologies, the management node may have a standardized API. Note that regarding the UL, cooperation between scheduling of wireless communication and scheduling of the PON may be implemented as dynamic bandwidth allocation (DBA).
5) The gNB-CU-CP that has received the notification of the confirmed radio schedule from the gNB-DU derives a schedule necessary for communication on the transmission path between the gNB-DU and the gNB-CU-UP and the transmission path between the gNB-CU-UP and the UPF on the basis of the radio schedule. The gNB-CU-CP notifies each management node, for example, the tSMF of the transport, of the schedule information. Note that the gNB-CU-CP may notify the management node of the transmission path between the gNB-CU-UP and the UPF, for example, the tSMF of the transport via the SMF when providing notification of the schedule information. Note that the gNB-CU-CP may notify the management node of the scheduling of the wireless communication part, and each management node may correct the time difference or the like due to the distance and use the corrected time difference or the like as the schedule information to be used by itself. In addition, in order to support various wired transmission technologies, the management node may have a standardized API.
6) Each management node performs scheduling on each transmission path.
7) The gNB-DU monitors whether or not the state of the queue in the device is appropriate for both the DL and the UL, and transmits the wireless scheduling correction information to the gNB-CU-CP as necessary.
8) The gNB-CU-CP that has received the correction information of the wireless schedule from the gNB-DU derives schedule correction information necessary for communication on the transmission path between the gNB-DU and the gNB-CU-UP and the transmission path between the gNB-CU-UP and the UPF on the basis of the correction information. The gNB-CU-CP notifies each management node, for example, the tSMF of the transport, of the schedule correction information. Note that the gNB-CU-CP may notify the management node of the transmission path between the gNB-CU-UP and the UPF, for example, the tSMF of the transport via the SMF when providing notification of the schedule correction information. Note that the gNB-CU-CP may notify the management node of the correction information of the scheduling of the wireless communication part, and each management node may correct the time difference or the like due to the distance and use the corrected time difference or the like as the schedule correction information to be used by itself. In addition, in order to support various wired transmission technologies, the management node may have a standardized API.
9) Each management node modifies scheduling on each transmission path.
10) According to 1) to 9) described above, the wireless schedule and the schedule of each unit of the wired transmission path are matched.

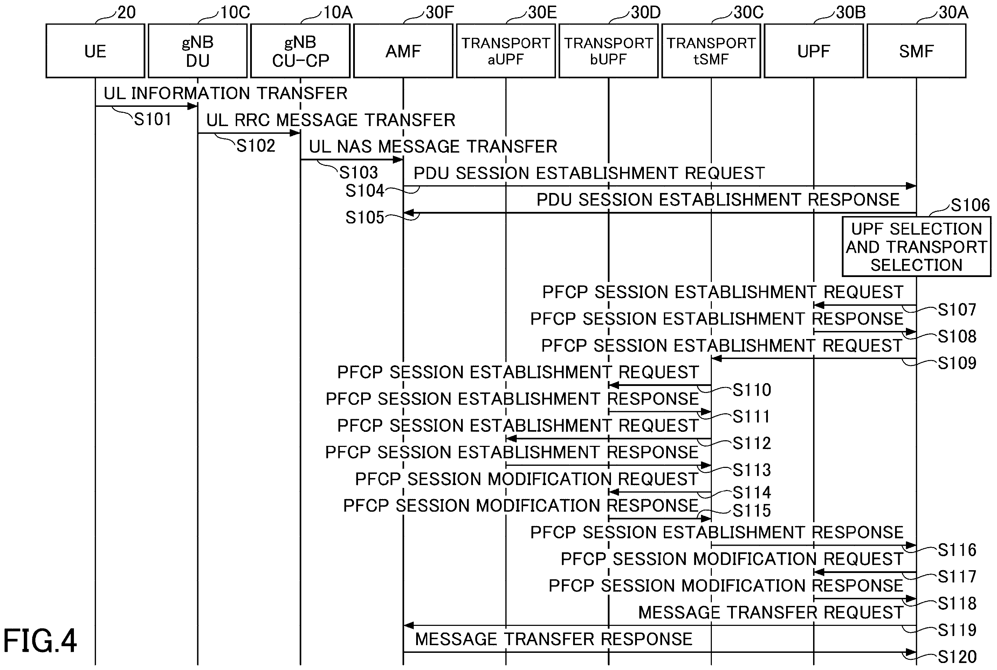

Fig. 4 is a sequence diagram illustrating an example (1) of PDU session establishment according to the embodiment of the present invention. In Fig. 4, the TEID corresponding to the UL of a UPF 30B is 1, the TEID corresponding to the DL of a bUPF 30D is 2, the TEID corresponding to the UL is 3, the TEID corresponding to the DL of an aUPF 30E is 4, and the TEID corresponding to the UL is 5.

In step S101, UE 20 transmits the UL information transfer to a gNB-DU 10C. Subsequently, the gNB-DU 10C transmits the UL-RRC message transfer to a gNB-CU-CP 10A (S102). Subsequently, the gNB-CU-CP 10A transmits the UL-NAS message transfer to an AMF 30F (S103). Subsequently, the AMF 30F transmits a PDU session establishment request to a SMF 30A (S104).

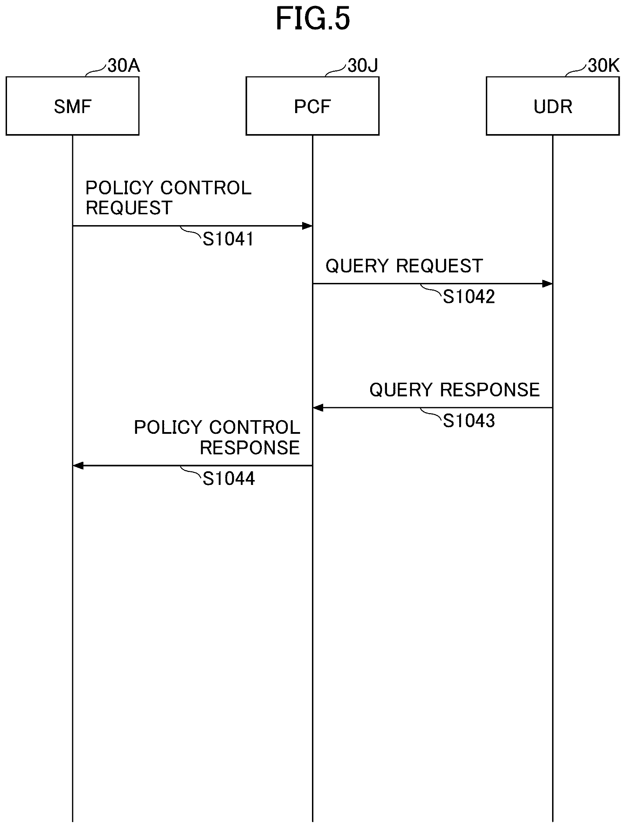

Fig. 5 is a sequence diagram illustrating an example (2) of PDU session establishment according to the embodiment of the present invention. Following step S104 illustrated in Fig. 4, step S1041 is executed. In step S1041, the SMF 30A transmits a policy control request including S-NSSAI and a DNN to a PCF 30J. Subsequently, the PCF 30J transmits a query request to a UDR 30K (S1042). Subsequently, the UDR 30K transmits a query response to the PCF 30J (S1043). Subsequently, the PCF 30J transmits a policy control response including the TSCAI to the SMF 30A. That is, the SMF 30A acquires the TSCAI using the S-NSSAI and the DNN as keys. The TSCAI may include TSCAI for the UL and TSCAI for the DL.

Refer back to Fig. 4. In step S105, the SMF 30A transmits a PDU session establishment response to the AMF 30F. Subsequently, the SMF 30A performs UPF selection and transport selection (S106). Subsequently, the SMF 30A transmits a packet forwarding control protocol (PFCP) session establishment request to the UPF 30B (S107). The PFCP session establishment request in step S107 includes an appropriate network instance selected by the SMF based on the S-NSSAI and the DNN. The network instance is assumed to be encoded with a transmission network operator name that provides transport and a transmission service type provided by the transmission network operator (for example, deterministic communication with slot allocation, or the like). Subsequently, the UPF 30B transmits a PFCP session establishment response to the SMF 30A (S108). In step S108, the UPF 30B selects an appropriate local F-TEID (Fully Qualified TEID) based on the network instance, and includes the same in the PFCP session establishment response. Fig. 4 illustrates an example in which F - TEID = 1.

In step S109, the SMF 30A transmits a PFCP session establishment request to a tSMF 30C. In the PFCP session establishment request in step S109, the SMF 30A sets a PLMN specific core for the DL source interface and the UL destination interface, sets a PLMN specific access for the DL destination interface and the UL source interface, and sets the own mobile country code (MCC)/mobile network code (MNC) as additional information for each setting, assuming the use of other company's transmission network. In addition, the PFCP session establishment request in step S109 includes information in which the TEID corresponding to the external header corresponding to the UL is 1. The SMF 30A configures the transport as one UPF. The tSMF 30C sets each of the plurality of UPFs in the transport on the basis of the setting. The tSMF 30C behaves as a UPF with respect to the SMF 30A, and behaves as an SMF with respect to the inside of the transport. The PLMN specific core may indicate the UPF in the PLMN, and the PLMN specific access may indicate the gNB-CU-UP in the PLMN.

In step S110, the tSMF 30C transmits a PFCP session establishment request to the bUPF 30D. In the PFCP session establishment request in step S110, the tSMF 30C sets the PLMN specific core in the DL source interface and the UL destination interface, and sets information in which the TEID corresponding to the UL external header is 1. Subsequently, the bUPF 30D transmits a PFCP session establishment response in which the F-TEID corresponding to the DL is set to 2 and the F-TEID corresponding to the UL is set to 3 to the tSMF 30C (S111). The bUPF 30D selects an appropriate DL TEID with respect to the UPF on the basis of the PLMN-ID.

In step S112, the tSMF 30C transmits a PFCP session establishment request to the aUPF 30E. In the PFCP session establishment request in step S112, the tSMF 30C sets PLMN specific access to the DL destination interface and the UL source interface, and sets information in which the TEID corresponding to the UL external header is 3. Subsequently, the aUPF 30E transmits a PFCP session establishment response in which the F-TEID corresponding to the DL is set to 4 and the F-TEID corresponding to the UL is set to 5 to the tSMF 30C (S113). The aUPF 30E selects an appropriate UL TEID with respect to the gNB on the basis of the PLMN-ID.

In step S114, the tSMF 30C transmits a PFCP session modification request in which the TEID corresponding to the DL external header is 4 to the bUPF 30D. Subsequently, the bUPF 30D transmits a PFCP session modification response to the tSMF 30C (S115). Subsequently, the tSMF 30C transmits a PFCP session establishment response in which the F-TEID corresponding to the DL is set to 2 and the F-TEID corresponding to the UL is set to 5 to the SMF 30A (S116). The tSMC 30C, the bUPF 30D, and the aUPF 30E appear as one UPF from the outside.

In step S117, the SMF 30A transmits a PFCP session modification request in which the TEID corresponding to the DL external header is 2 to the UPF 30B. Subsequently, the UPF 30B transmits a PFCP session modification response to the SMF 30A (S118). Subsequently, the SMF 30A transmits a message transfer request including an endpoint IP address in the UL, information with a GTP (GPRS Tunnelling Protocol)-TEID of 5, and a network instance to the AMF 30F (S119). The message transfer request may further include schedule information based on the TSCAI acquired by the SMF 30A. The message transfer request requests resource setting of the PDU session. Subsequently, the AMF 30F transmits a message transfer response to the SMF 30A (S120).

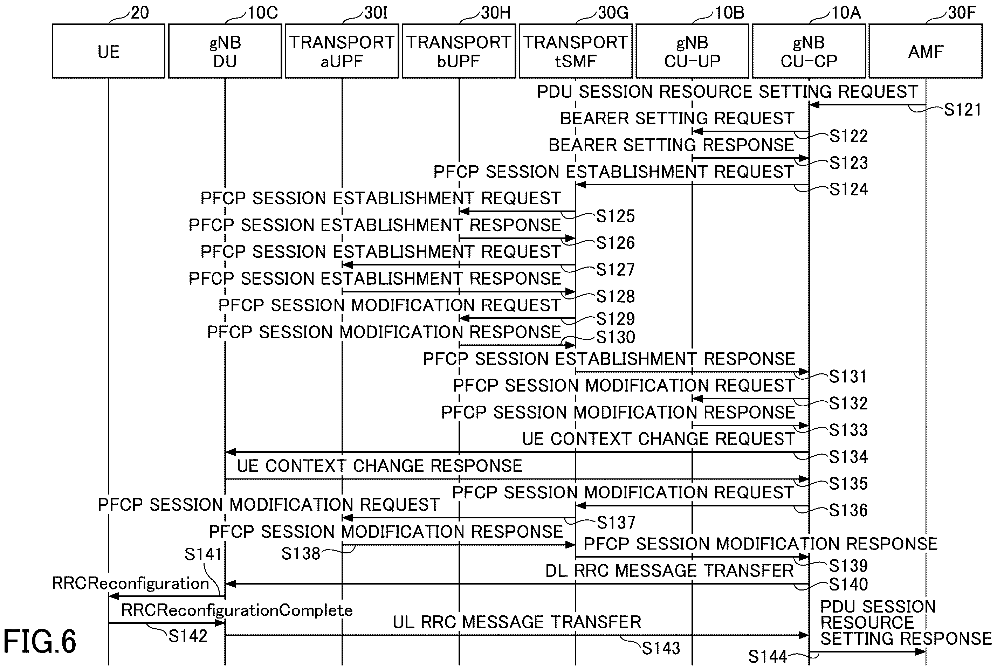

Fig. 6 is a sequence diagram illustrating an example (3) of PDU session establishment according to the embodiment of the present invention. In Fig. 6, the TEID corresponding to the DL of a gNB-CU-UP 10A is 6, the TEID corresponding to the UL is 7, the TEID corresponding to the DL of a bUPF 30H is 8, the TEID corresponding to the UL is 9, the TEID corresponding to the DL of an aUPF 30I is 10, the TEID corresponding to the UL is 11, and the TEID corresponding to the DL of a gNB-DU is 12.

In step S121, an AMF 30F transmits a PDU session resource setting request including an endpoint IP address in the UL, information with GTP-TEID of 5, and a network instance to the gNB-CU-CP 10A. Here, the gNB-CU-CP 10A may select an appropriate gNB-CU-UP 10B and a transmission network operator. Note that the network instance may be an appropriate network instance selected by the gNB-CU-CP 10A based on S-NSSAI and a DNN. The network instance is assumed to be encoded with a transmission network operator name that provides transport and a transmission service type provided by the transmission network operator (for example, deterministic communication with slot allocation, or the like). The PDU session resource setting request may further include schedule information based on the TSCAI acquired by the SMF 30A.

Subsequently, the gNB-CU-CP 10A transmits, to the gNB-CU-UP 10B, a bearer setting request including the transport layer address of the UL, the information with GTP-TEID of 5, and the network instance (S122). The network instance is assumed to be encoded with a transmission network operator name that provides transport and a transmission service type provided by the transmission network operator (for example, deterministic communication with slot allocation, or the like). Subsequently, the gNB-CU-UP 10B transmits a bearer setting response in which the GTP-TEID is set to 6 as the transport layer address corresponding to the DL and the GTP-TEID is set to 7 as the transport layer address corresponding to the UL to the gNB-CU-CP 10A (S123). In step S123, the gNB-CU-UP 10B selects an appropriate local GTP-TEID based on the network instance in the UL and includes the same in the bearer setting response. Fig. 6 illustrates an example in which DL is GTP - TEID = 6 and UL is GTP - TEID = 7.

In step S124, the gNB-CU-CP 10A transmits a PFCP session establishment request to a tSMF 30G. In the PFCP session establishment request in step S124, the PLMN specific core is set in the DL source interface and the UL destination interface, and the PLMN specific access is set in the DL destination interface and the UL source interface. In addition, the PFCP session establishment request in step S124 includes information in which the TEID corresponding to the external header corresponding to the UL is 7. The gNB-CU-CP 10A configures the transport as one UPF. The tSMF 30G sets each of the plurality of UPFs in the transport on the basis of the setting. The tSMF 30G behaves as a UPF with respect to the gNB-CU-CP 10A, and behaves as an SMF with respect to the inside of the transport.

In step S125, the tSMF 30G transmits a PFCP session establishment request to the bUPF 30H. In the PFCP session establishment request in step S125, the tSMF 30G sets the PLMN specific core in the DL source interface and the UL destination interface, and sets information in which the TEID corresponding to the UL external header is 7. Subsequently, the bUPF 30H transmits a PFCP session establishment response in which the F-TEID corresponding to the DL is set to 8 and the F-TEID corresponding to the UL is set to 9 to the tSMF 30G (S126). The bUPF 30H selects an appropriate DL TEID with respect to the gNB-CU-UP on the basis of the PLMN-ID.

In step S127, the tSMF 30G transmits a PFCP session establishment request to the aUPF 30I. In the PFCP session establishment request in step S127, the tSMF 30G sets PLMN specific access to the DL destination interface and the UL source interface, and sets information in which the TEID corresponding to the UL external header is 9. Subsequently, the aUPF 30I transmits a PFCP session establishment response in which the F-TEID corresponding to the DL is set to 10 and the F-TEID corresponding to the UL is set to 11 to the tSMF 30G (S128). The aUPF 30I selects an appropriate UL TEID with respect to the gNB-DU on the basis of the PLMN-ID.

In step S129, the tSMF 30G transmits a PFCP session modification request in which the TEID corresponding to the DL external header is 10 to the bUPF 30H. Subsequently, the bUPF 30H transmits a PFCP session modification response to the tSMF 30G (S130). Subsequently, the tSMF 30G transmits a PFCP session establishment response in which the F-TEID corresponding to the DL is set to 8 and the F-TEID corresponding to the UL is set to 11 to the gNB-CU-CP 10A (S131). The tSMC 30G, the bUPF 30H, and the aUPF 30I appear as one UPF from the outside.

In step S132, the gNB-CU-CP 10A transmits a PFCP session modification request in which the TEID corresponding to the DL external header is 8 to the gNB-CU-UP 10B. Subsequently, the gNB-CU-UP 10B transmits a PFCP session modification response to the gNB-CU-CP 10A (S133). Subsequently, the gNB-CU-CP 10A transmits a UE context change request including the UL transport layer address and information with GTP-TEID of 11 to the gNB-DU 10C (S134). The UE context change request may further include schedule support information based on the TSCAI acquired by the SMF 30A. Subsequently, the gNB-DU 10C transmits a UE context change response including the DL transport layer address and information with GTP-TEID of 12 to the gNB-CU-CP 10A (S135). In the gNB-DU 10C, the UE context change response may further include "TSC traffic characteristics information" as the actually established wireless-side scheduling information on the basis of the schedule support information based on the TSCAI acquired by the SMF 30A.

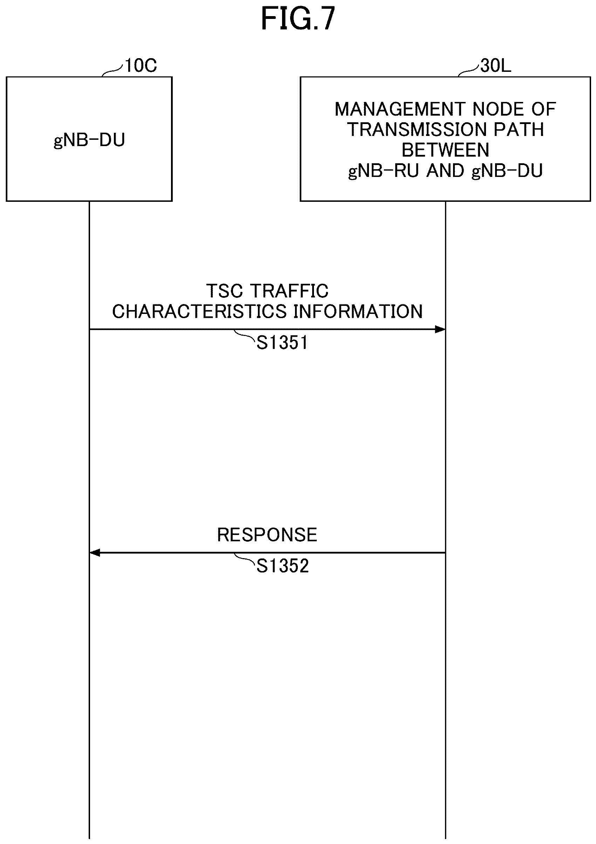

Fig. 7 is a sequence diagram illustrating an example (4) of PDU session establishment according to the embodiment of the present invention. In parallel with step S135, the steps illustrated in Fig. 7 may be performed. In step S1351, the gNB-DU 10C notifies a management node 30L (for example, an OLT in the case of a PON) of a transmission path between the gNB-RU and the gNB-DU 10C of the TSC traffic characteristics information. The management node appropriately executes scheduling of the transmission path between the gNB-RU and the gNB-DU 10C on the basis of the TSC traffic characteristics information. Subsequently, the management node 30L of the transmission path between the gNB-RU and the gNB-DU 10C transmits a response to the gNB-DU 10C (S1352).

Refer back to Fig. 6. Note that, when steps S132 and S133 are changed to the bearer context change request and the bearer context change response, the amount of change of the gNB-CU-UP can be reduced.

In step S136, the gNB-CU-CP 10A transmits a PFCP session modification request in which the TEID corresponding to the outer header of the DL is 12 to the tSMF 30G. The PFCP session modification request may further include TSC information generated based on the TSC traffic characteristics information. Note that the TSC information may be the same as the TSC traffic characteristics information. The tSMF 30G appropriately performs scheduling of the transmission path between the aUPF 30I and the bUPF 30H on the basis of the TSC information. Subsequently, the tSMF 30G transmits a PFCP session modification request with the TEID corresponding to the outer header of the DL as 12 to the aUPF 30I (S137). Subsequently, the aUPF 30I transmits a PFCP session modification response to the tSMF 30G (S138). Subsequently, the tSMF 30G transmits a PFCP session modification response to the gNB-CU-CP 10A (S139).

In step S140, the gNB-CU-CP 10A transmits the DL-RRC message transfer indicating that the PDU session establishment is accepted to the gNB-DU 10C. Subsequently, the gNB-DU 10C transmits RRCReconfiguration indicating that the PDU session establishment is accepted to UE 20 (S141). Subsequently, the UE 20 transmits RRCReconfigurationComplete to the gNB-DU 10C (S142). Subsequently, the gNB-DU 10C transmits the UL-RRC message transfer indicating that the RRC reconfiguration is completed to the gNB-CU-CP 10A (S143). Subsequently, the gNB-CU-CP 10A transmits an endpoint IP address in the DL and a PDU session resource setting response indicating that the GTP-TEID is 6 to the AMF 30F (S144). The PDU session resource setting response may further include TSC traffic characteristics information.

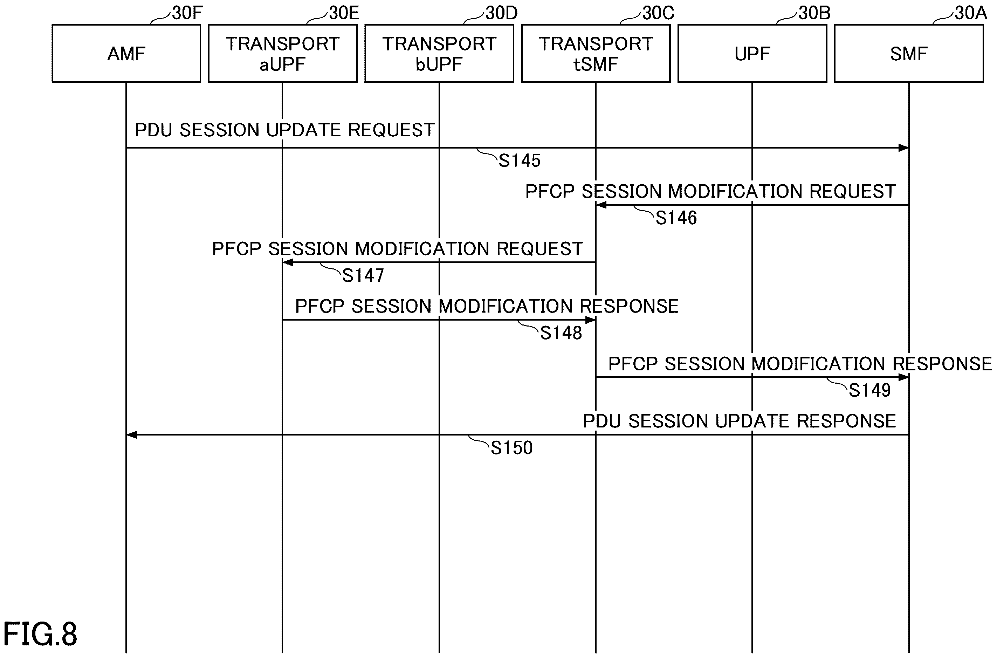

Fig. 8 is a sequence diagram illustrating an example (5) of PDU session establishment according to the embodiment of the present invention. In step S145, an AMF 30F transmits the endpoint IP address in the DL and the PDU session update request indicating that the GTP-TEID is 6 to a SMF 30A. The PDU session resource update request may further include TSC traffic characteristics information. Subsequently, the SMF 30A transmits a PFCP session modification request with the TEID corresponding to the outer header of the DL as 6 to a tSMF 30C (S146). The PFCP session modification request may further include TSC information generated based on the TSC traffic characteristics information. Note that the TSC information may be the same as the TSC traffic characteristics information. The tSMF 30C appropriately performs scheduling of the transmission path between an aUPF 30E and a bUPF 30D on the basis of the TSC information. Subsequently, the tSMF 30C transmits a PFCP session modification request with the TEID corresponding to the outer header of the DL as 6 to the aUPF 30I (S147). Subsequently, the aUPF 30I transmits a PFCP session modification response to the tSMF 30G (S148). Subsequently, the tSMF 30C transmits a PFCP session modification response to the SMF 30A (S149). Subsequently, the SMF 30A transmits a PDU session update response to the AMF 30F (S150).

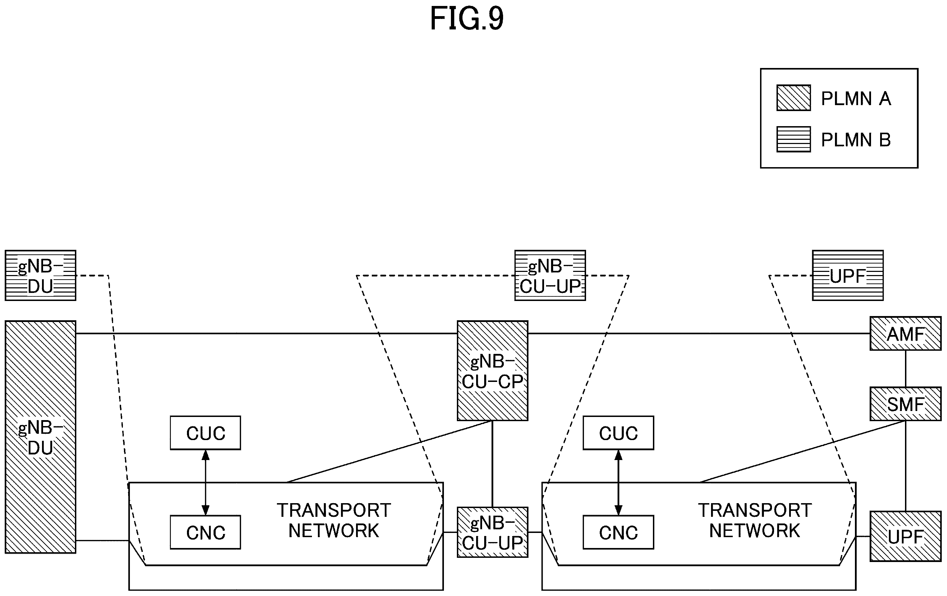

Hereinafter, other embodiments that can be combined with the above-described embodiments will be described. Fig. 9 is a diagram illustrating an example (2) of a network configuration according to the embodiment of the present invention. As illustrated in Fig. 9, a mechanism has been studied in which a transport layer between the RAN and the UPF is a transport network having a TSN function, and a centralized user configuration (CUC) included in a 5G core network (5GC) controls a CNC included in the transport network.

The CUC may be any network node existing in the 5GC, and any NF may implement the function related to the CUC. For example, the SMF may execute the function related to the CUC, or the gNB-CU-CP may execute the function related to the CUC. Furthermore, the transport network between the gNB-DU and the gNB-CU-UP and the transport network between the gNB-CU-UP and the UPF illustrated in Fig. 9 may be controlled by the same CUC and/or the same CNC. Furthermore, the "transport network" may correspond to the "transport" of the above-described embodiment.

Here, when the transport network does not have a GTP-U endpoint, it is difficult to associate the traffic characteristics transmitted from the CUC to the CNC with appropriate traffic.

Therefore, a transport network stream filter described below may be defined.

The transport network stream filter includes a filter having a stream ID, and a source IP address, a destination IP address, a destination GTP-U-TEID, and a QoS flow identifier in a PDU contact container in a GTP-U extension header. The destination GTP-U-TEID is corresponding to a tunnel endpoint identifier.

The traffic characteristics corresponding to the scheduling information also include the stream ID. The CUC transmits the transport network stream filter and the traffic characteristics to the CNC.

The CNC derives a stream filter instance identifier in association with a received stream ID, derives a stream handle specification in association with a transport network stream filter, and derives a setting of a stream gate instance identifier, each stream gate instance, and enhancements for scheduled traffic in association with traffic characteristics, with respect to a Per-stream filtering and policing (PSFP) (see Non Patent Literature 2) used in the TSN.

Note that, although the transport network has the TSN function in the above description, even in a case where the transport network does not have the TSN function, the above embodiment can be applied to a case where it is necessary to sort the traffic and associate the traffic characteristics.

For example, when the scheduling information is transmitted to the transport network, the transport network may acquire information for identifying the traffic corresponding to the scheduling information based on the transport network stream filter and/or the traffic characteristics transmitted together with the scheduling information.

The transport network may identify the stream and perform filtering based on the transport network stream filter received by the CNC.

By applying the above-described embodiment, it is possible to promote the growth of a transmission network operator that provides a transmission path having advanced transmission capability such as enabling deterministic communication with slot allocation or having added value such as relay via a time synchronization server. The PLMN can provide a subscriber with an advanced service whose amount is less likely to increase as traffic by using a service of a transmission network operator. In addition, by enhancing the contents of the traffic characteristics provided to the transmission path in the off-path, it can be expected that the optical transmission path in particular will be effectively utilized.

Further, the PLMN can select another carrier transmission path for each call according to the traffic characteristics. The transmission network operator can respond to a transmission service provision request for each call from a plurality of PLMNs. The transmission network can acquire traffic characteristics off-path.

Furthermore, the delay can be shortened by applying the above-described embodiment. The transmission path resource of the wired portion can be efficiently used. In addition, as a secondary effect, the guarantee of low jitter or isochronicity is originally a function of a DS-TT (Device-Side TSN Translator) and a NW-TT (Network-Side TSN Translator), but in a case where the RAN always performs scheduling according to the TSCAI, it is possible to perform low jitter or isochronous communication without the DS-TT and the NW-TT.

That is, in the wireless communication system, the use efficiency of the user data transmission path can be improved.

### (Device Configuration)

Next, functional configuration examples of the base station 10 and the terminal 20 that execute the processes and operations described above will be described. The base station 10 and the terminal 20 include a function of implementing the above-described embodiment. However, each of the base station 10 and the terminal 20 may have only some functions in the embodiment.

### <Base Station 10>

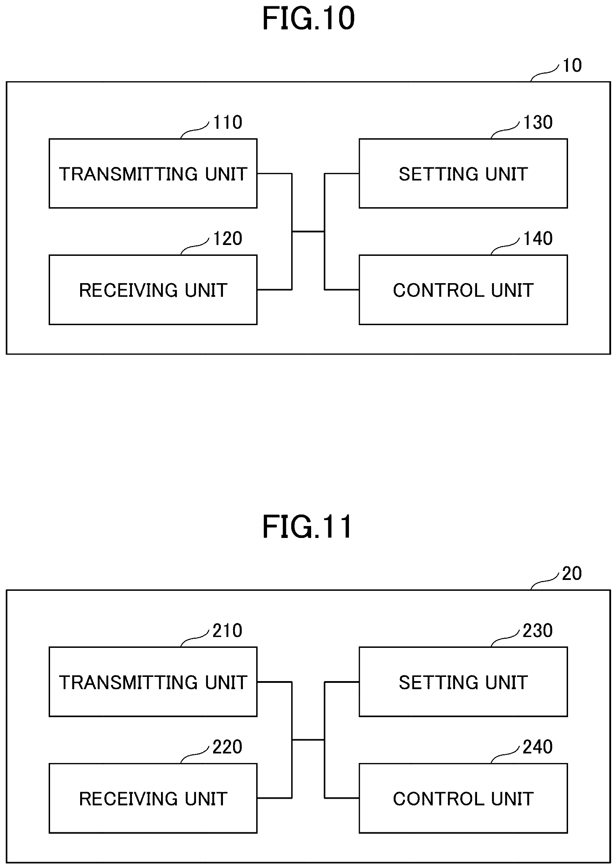

Fig. 10 is a diagram illustrating an example of a functional configuration of a base station 10 according to the embodiment of the present invention. As illustrated in Fig. 10, the base station 10 includes a transmitting unit 110, a receiving unit 120, a setting unit 130, and a control unit 140. The functional configuration illustrated in Fig. 10 is merely an example. As long as the operation according to the embodiment of the present invention can be performed, the functional classification and the name of the functional unit may be anything. The network node 30 may have a functional configuration similar to that of the base station 10.

The transmitting unit 110 has a function of generating a signal to be transmitted to the terminal 20 side and wirelessly transmitting the signal. In addition, the transmitting unit 110 transmits an inter-network node message to another network node. The receiving unit 120 has a function of receiving various signals transmitted from the terminal 20, and acquiring information of a higher layer, for example, from the received signals. In addition, the transmitting unit 110 has a function of transmitting NR-PSS, NR-SSS, NR-PBCH, DL/UL control signals, and the like to the terminal 20. Further, the receiving unit 120 receives an inter-network node message from another network node.

The setting unit 130 stores setting information set in advance and various types of setting information to be transmitted to the terminal 20. The content of the setting information is, for example, information related to the PDU session.

As described in the embodiment, the control unit 140 performs control related to communication by the PDU session. Furthermore, the control unit 140 controls communication with the terminal 20 on the basis of the UE capability report regarding the radio parameter received from the terminal 20. The functional unit related to signal transmission in the control unit 140 may be included in the transmitting unit 110, and the functional unit related to signal reception in the control unit 140 may be included in the receiving unit 120.

### <Terminal 20>

Fig. 11 is a diagram illustrating an example of a functional configuration of the terminal 20 in an embodiment of the present invention. As illustrated in Fig. 11, the terminal 20 includes a transmitting unit 210, a receiving unit 220, a setting unit 230, and a control unit 240. The functional configuration illustrated in Fig. 11 is merely an example. As long as the operation according to the embodiment of the present invention can be performed, the functional classification and the name of the functional unit may be anything.

The transmitting unit 210 creates a transmission signal from the transmission data and wirelessly transmits the transmission signal. The receiving unit 220 wirelessly receives various signals and acquires a signal of a higher layer from the received signal of the physical layer. In addition, the receiving unit 220 has a function of receiving NR-PSS, NR-SSS, NR-PBCH, DL/UL/SL control signals, and the like transmitted from the base station 10. Furthermore, for example, the transmitting unit 210 transmits a physical sidelink control channel (PSCCH), a physical sidelink shared channel (PSSCH), a physical sidelink discovery channel (PSDCH), a physical sidelink broadcast channel (PSBCH), or the like to the other terminal 20 as the D2D communication, and the receiving unit 120 receives the PSCCH, the PSSCH, the PSDCH, the PSBCH, or the like from the other terminal 20.

The setting unit 230 stores various types of setting information received from the base station 10 by the receiving unit 220. The setting unit 230 also stores setting information set in advance. The content of the setting information is, for example, information related to the PDU session.

As described in the embodiment, the control unit 240 performs control related to communication by the PDU session. The functional unit related to signal transmission in the control unit 240 may be included in the transmitting unit 210, and the functional unit related to signal reception in the control unit 240 may be included in the receiving unit 220.

### (Hardware Configuration)

The block diagrams (Figs. 10 and 11) used for the description of the above embodiment illustrate blocks of functional units. These functional blocks (configuration units) are implemented by any combination of at least one of hardware or software. A method for implementing each functional block is not particularly limited. That is, each functional block may be implemented by using one physically or logically combined device, or may be implemented by directly or indirectly (for example, by using wired, wireless, or the like) connecting two or more physically or logically separated devices and using a plurality of these devices. The functional block may be implemented by combining software with the one device or the plurality of devices.

The functions include, but are not limited to, determining, judging, calculating, computing, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. For example, a functional block (configuration unit) that causes transmission to function is referred to as a transmitting unit or a transmitter. In any case, as described above, the implementation method is not particularly limited.

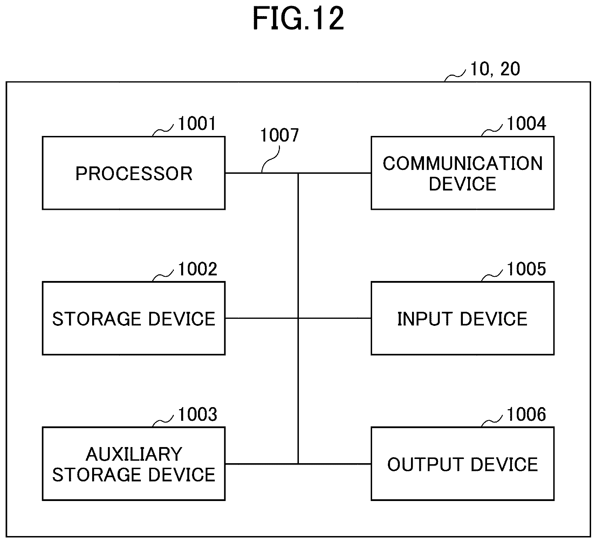

For example, the base station 10, the terminal 20, and the like in an embodiment of the present disclosure may function as a computer that performs the processing of the wireless communication method of the present disclosure. Fig. 12 is a diagram illustrating an example of a hardware configuration of the base station 10 and the terminal 20 according to an embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "apparatus" can be replaced with a circuit, a device, a unit, or the like. The hardware configuration of the base station 10 and the terminal 20 may be configured to include one or a plurality of devices illustrated in the drawings, or may be configured without including some devices.

Each function in the base station 10 and the terminal 20 is implemented by the processor 1001 performing operation by loading predetermined software (program) on hardware such as the processor 1001 and the storage device 1002, controlling communications by the communication device 1004, and controlling at least one of reading or writing of data in the storage device 1002 and the auxiliary storage device 1003.

The processor 1001 operates, for example, an operating system to control the entire computer. The processor 1001 may include a central processing unit (CPU) including an interface with a peripheral device, a control device, an arithmetic device, a register, and the like. For example, the control unit 140, the control unit 240, and the like described above may be implemented by the processor 1001.

In addition, the processor 1001 reads a program (program code), a software module, data, or the like from at least one of the auxiliary storage device 1003 or the communication device 1004 to the storage device 1002, and executes various processes according to the data. As the program, a program that causes a computer to execute at least part of the operations described in the above-described embodiments is used. For example, the control unit 140 of the base station 10 illustrated in Fig. 10 may be implemented by a control program stored in the storage device 1002 and operated by the processor 1001. Furthermore, for example, the control unit 240 of the terminal 20 illustrated in Fig. 11 may be implemented by a control program stored in the storage device 1002 and operated by the processor 1001. Although it has been described that the above-described various processes are executed by one processor 1001, the various processes may be executed simultaneously or sequentially by two or more processors 1001. The processor 1001 may be implemented by one or more chips. The program may be transmitted from a network via an electric communication line.

The storage device 1002 is a computer-readable recording medium, and may include, for example, at least one of a read only memory (ROM), an erasable programmable ROM (EPROM), an electrically erasable programmable ROM (EEPROM), a random access memory (RAM), or the like. The storage device 1002 may be referred to as a register, a cache, a main memory (main storage device), or the like. The storage device 1002 can store a program (program code), a software module, and the like that can be executed to implement the communication method according to an embodiment of the present disclosure.

The auxiliary storage device 1003 is a computer-readable recording medium, and may include, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, a magnetic strip, or the like. The above-described storage medium may be, for example, a database including at least one of the storage device 1002 or the auxiliary storage device 1003, a server, or another appropriate medium.

The communication device 1004 is hardware (transmission/reception device) for performing communication between computers via at least one of a wired network or a wireless network, and is also referred to as, for example, a network device, a network controller, a network card, a communication module, or the like. The communication device 1004 may include a high-frequency switch, a duplexer, a filter, a frequency synthesizer, and the like in order to implement, for example, at least one of frequency division duplex (FDD) or time division duplex (TDD). For example, the transmission/reception antenna, the amplifier unit, the transmission/reception unit, the transmission/reception path interface, and the like may be implemented by the communication device 1004. The transmission/reception unit may be physically or logically separated between the transmitting unit and the receiving unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, and the like) that performs output to the outside. Note that the input device 1005 and the output device 1006 may be an integrated configuration (for example, the touch panel).

In addition, the respective devices such as the processor 1001 and the storage device 1002 are connected by a bus 1007 for communicating information. The bus 1007 may be configured using a single bus or may be configured using different buses between the devices.

Furthermore, the base station 10 and the terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented using at least one of these pieces of hardware.

### (Summary of Embodiments)

As described above, according to an embodiment of the present invention, provided is a network node including: a transmitting unit configured to transmit scheduling support information to a next generation Node B Distributed Unit (gNB-DU); and a receiving unit configured to receive wireless-side scheduling information generated by the gNB-DU based on the scheduling support information, in which the transmitting unit transmits schedule information based on the wireless-side scheduling information to a transport installed between the gNB-DU and a next generation Node B-Central Unit-User Plane (gNB-CU-UP) in a data transmission path.

With the above configuration, the delay can be shortened. The transmission path resource of the wired portion can be efficiently used.

In addition, as a secondary effect, the guarantee of low jitter or isochronicity is originally a function of a DS-TT (Device-Side TSN Translator) and a NW-TT (Network-Side TSN Translator), but in a case where the RAN always performs scheduling according to the TSCAI, it is possible to perform low jitter or isochronous communication without the DS-TT and the NW-TT. That is, in the wireless communication system, the use efficiency of the user data transmission path can be improved.

A control unit that generates a schedule in a data transmission path between the gNB-DU and the gNB-CU-UP on the basis of the wireless-side scheduling information may be further included, and the generated schedule may be transmitted to the transport. With this configuration, the delay can be shortened, and the transmission path resource of the wired portion can be efficiently used.

Furthermore, according to an embodiment of the present invention, provided is a network node including: a transmitting unit configured to transmit scheduling support information to an access and mobility management function (AMF); and a receiving unit configured to receive, from the AMF, wireless-side scheduling information generated by a next generation Node B Distributed Unit (gNB-DU) based on the scheduling support information, in which the transmitting unit transmits the wireless-side scheduling information to a transport installed between a user plane function (UPF) and a next generation Node B-Central Unit-User Plane (gNB-CU-UP) on a data transmission path.

With the above configuration, the delay can be shortened. The transmission path resource of the wired portion can be efficiently used. In addition, as a secondary effect, the guarantee of low jitter or isochronicity is originally a function of a DS-TT (Device-Side TSN Translator) and a NW-TT (Network-Side TSN Translator), but in a case where the RAN always performs scheduling according to the TSCAI, it is possible to perform low jitter or isochronous communication without the DS-TT and the NW-TT. That is, in the wireless communication system, the use efficiency of the user data transmission path can be improved.

Furthermore, according to an embodiment of the present invention, provided is a network node including: a receiving unit that receives scheduling support information; a control unit that determines wireless-side scheduling information based on the scheduling support information; and a transmitting unit that transmits the wireless-side scheduling information to a management node of a data transmission path with a next generation Node B-Remote Unit (gNB-RU).

With the above configuration, the delay can be shortened. The transmission path resource of the wired portion can be efficiently used. In addition, as a secondary effect, the guarantee of low jitter or isochronicity is originally a function of a DS-TT (Device-Side TSN Translator) and a NW-TT (Network-Side TSN Translator), but in a case where the RAN always performs scheduling according to the TSCAI, it is possible to perform low jitter or isochronous communication without the DS-TT and the NW-TT. That is, in the wireless communication system, the use efficiency of the user data transmission path can be improved.

Furthermore, according to an embodiment of the present invention, provided is a communication method performed by a network node, the communication method including: a transmitting procedure of transmitting scheduling support information to a next generation Node B Distributed Unit (gNB-DU); a receiving procedure of receiving wireless-side scheduling information generated by the gNB-DU based on the scheduling support information; and a transmitting procedure of transmitting schedule information based on the wireless-side scheduling information to a transport installed between the gNB-DU and a next generation Node B-Central Unit-User Plane (gNB-CU-UP) in a data transmission path.

With the above configuration, the delay can be shortened. The transmission path resource of the wired portion can be efficiently used. In addition, as a secondary effect, the guarantee of low jitter or isochronicity is originally a function of a DS-TT (Device-Side TSN Translator) and a NW-TT (Network-Side TSN Translator), but in a case where the RAN always performs scheduling according to the TSCAI, it is possible to perform low jitter or isochronous communication without the DS-TT and the NW-TT. That is, in the wireless communication system, the use efficiency of the user data transmission path can be improved.

Furthermore, according to an embodiment of the present invention, provided is a network node including: a transmitting unit configured to transmit scheduling support information to an access and mobility management function (AMF); and a receiving unit configured to receive, from the AMF, wireless-side scheduling information generated by a next generation Node B Distributed Unit (gNB-DU) based on the scheduling support information, in which the transmitting unit transmits the wireless-side scheduling information and information for identifying traffic to which the wireless-side scheduling information is applied to a transport network installed between a user plane function (UPF) and a next generation Node B-Central Unit-User Plane (gNB-CU-UP) in a data transmission path.

With the above configuration, the delay can be shortened. The transmission path resource of the wired portion can be efficiently used. In addition, as a secondary effect, the guarantee of low jitter or isochronicity is originally a function of a DS-TT (Device-Side TSN Translator) and a NW-TT (Network-Side TSN Translator), but in a case where the RAN always performs scheduling according to the TSCAI, it is possible to perform low jitter or isochronous communication without the DS-TT and the NW-TT. That is, in the wireless communication system, the use efficiency of the user data transmission path can be improved.

Further, according to an embodiment of the present invention, provided is a network node including: a transmitting unit configured to transmit scheduling support information to a next generation Node B Distributed Unit (gNB-DU); and a receiving unit configured to receive wireless-side scheduling information generated by the gNB-DU based on the scheduling support information, in which the transmitting unit transmits schedule information based on the wireless-side scheduling information and information for identifying traffic to which the wireless-side scheduling information is applied to a transport network installed between the gNB-DU and a next generation Node B-Central Unit-User Plane (gNB-CU-UP) in a data transmission path.

With the above configuration, the delay can be shortened. The transmission path resource of the wired portion can be efficiently used. In addition, as a secondary effect, the guarantee of low jitter or isochronicity is originally a function of a DS-TT (Device-Side TSN Translator) and a NW-TT (Network-Side TSN Translator), but in a case where the RAN always performs scheduling according to the TSCAI, it is possible to perform low jitter or isochronous communication without the DS-TT and the NW-TT. That is, in the wireless communication system, the use efficiency of the user data transmission path can be improved.

Furthermore, according to an embodiment of the present invention, provided is a communication method performed by a network node, the communication method including: a transmitting procedure of transmitting scheduling support information to an access and mobility management function (AMF); a receiving procedure of receiving, from the AMF, wireless-side scheduling information generated by a next generation Node B Distributed Unit (gNB-DU) based on the scheduling support information; and a transmitting procedure of transmitting the wireless-side scheduling information and information for identifying traffic to which the wireless-side scheduling information is applied to a transport network installed between a user plane function (UPF) and a next generation Node B-Central Unit-User Plane (gNB-CU-UP) in a data transmission path.

With the above configuration, the delay can be shortened. The transmission path resource of the wired portion can be efficiently used. In addition, as a secondary effect, the guarantee of low jitter or isochronicity is originally a function of a DS-TT (Device-Side TSN Translator) and a NW-TT (Network-Side TSN Translator), but in a case where the RAN always performs scheduling according to the TSCAI, it is possible to perform low jitter or isochronous communication without the DS-TT and the NW-TT. That is, in the wireless communication system, the use efficiency of the user data transmission path can be improved.

### (Supplement to Embodiment)

Although the embodiments of the present invention have been described above, the disclosed invention is not limited to such embodiments, and those skilled in the art will understand various modifications, changes, alternatives, substitutions, and the like. Although the description has been given using specific numerical examples to facilitate understanding of the invention, these numerical values are merely examples, and any appropriate value may be used unless otherwise specified. The classification of items in the above description is not essential to the present invention, and items described in two or more items may be used in combination as necessary, or items described in one item may be applied to items described in another item (as long as there is no contradiction). A boundary of a functional unit or a processing unit in the functional block diagram does not necessarily correspond to a boundary of a physical component. The operation of the plurality of functional units may be physically performed by one component, or the operation of one functional unit may be physically performed by a plurality of components. In the processing procedure described in the embodiment, the order of the processing may be changed as long as there is no contradiction. For convenience of processing description, the network node 30 and the terminal 20 have been described using a functional block diagram, but such a device may be implemented in hardware, software, or a combination thereof. The software operated by the processor included in the network node 30 according to the embodiments of the present invention and the software operated by the processor included in the terminal 20 according to the embodiments of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, or a server.

Furthermore, the notification of information is not limited to the aspects/embodiments described in the present disclosure, and may be performed using other methods. For example, the notification of information may be performed by physical layer signaling (for example, downlink control information (DCI), and uplink control information (UCI)), higher layer signaling (for example, radio resource control (RRC) signaling, and medium access control (MAC) signaling), broadcast information (master information block (MIB), and system information block (SIB)), other signals, or a combination thereof. Furthermore, the RRC signaling may be referred to as an RRC message, and may be, for example, an RRC connection setup message, an RRC connection reconfiguration message, or the like.

Each aspect/embodiment described in the present disclosure may be applied to at least one of systems using long term evolution (LTE), LTE-Advanced (LTE-A), SUPER 3G, IMT-Advanced, 4G (4th generation mobile communication system), 5G (5th generation mobile communication system), future radio access (FRA), new radio (NR), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), other appropriate systems, ot next-generation systems extended based on the these systems. Also, a plurality of systems may be applied in combination (for example, a combination of at least one of LTE or LTE-A and 5G, and the like).

The order of the processing procedure, sequence, flowchart, and the like of each aspect/embodiment described in the present specification may be changed as long as there is no contradiction. For example, for the methods described in the present disclosure, elements of various steps are presented using an example order, and are not limited to the particular order presented.

The specific operation described as being performed by the network node 30 in the present specification may be performed by an upper node thereof in some cases. It is obvious that in a network including one or a plurality of network nodes having the network node 30, various operations performed for communication with the terminal 20 may be performed by at least one of the network node 30 or other network nodes (for example, MME, S-GW, or the like is conceivable, but is not limited thereto) other than the network node 30. Although the case where there is one other network node other than the network node 30 has been exemplified above, the other network node may be a combination of a plurality of other network nodes (for example, MME and S-GW).

Information, a signal, or the like described in the present disclosure can be output from an upper layer (or lower layer) to a lower layer (or upper layer). Input and output may be performed via a plurality of network nodes.

The input/output information and the like may be stored in a specific location (for example, memory) or may be managed using a management table. The input/output information and the like can be overwritten, updated, or additionally written. The output information and the like may be deleted. The input information and the like may be transmitted to another device.

The determination in the present disclosure may be made by a value represented by one bit (0 or 1), may be made by a true/false value (Boolean: true or false), or may be made by comparison of numerical values (for example, comparison with a predetermined value).

Software, whether referred to as software, firmware, middleware, microcode, hardware description language, or other names, should be construed broadly to mean instructions, instruction sets, code, code segments, program code, programs, subprograms, software modules, applications, software applications, software packages, routines, subroutines, objects, executable files, execution threads, procedures, functions, and the like.

In addition, software, instruction, information, and the like may be transmitted and received via a transmission medium. For example, when software is transmitted from a website, server, or other remote source using at least one of a wired technology (a coaxial cable, an optical fiber cable, a twisted pair, a digital subscriber line (DSL), or the like) or a wireless technology (infrared rays, microwaves, or the like), at least one of these wired or wireless technologies is included within the definition of the transmission medium.

The information, signals, and the like described in the present disclosure may be represented using any of a variety of different techniques. For example, data, instructions, commands, information, signals, bits, symbols, chips, and the like that may be mentioned throughout the above description may be represented by voltages, currents, electromagnetic waves, magnetic fields or particles, optical fields or photons, or any combination thereof.

Note that the terms described in the present disclosure and the terms necessary for understanding the present disclosure may be replaced with terms having the same or similar meanings. For example, at least one of the channel or the symbol may be a signal (signaling). The signal may also be a message. In addition, a component carrier (CC) may be referred to as a carrier frequency, a cell, a frequency carrier, or the like.

The terms "system" and "network" used in the present disclosure are used interchangeably.

In addition, the information, the parameter, and the like described in the present disclosure may be represented using an absolute value, may be represented using a relative value from a predetermined value, or may be represented using another corresponding information. For example, the radio resource may be indicated by an index.

The names used for the parameters described above are not limited in any respect. Furthermore, expressions and the like using these parameters may be different from those explicitly disclosed in the present disclosure. Since various channels (for example, PUCCH, PDCCH, and the like) and information elements can be identified by any suitable name, various names assigned to these various channels and information elements are not in any way limitative names.

In the present disclosure, terms such as "base station (BS)", "radio base station", "base station device", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may also be referred to as a macro cell, a small cell, a femto cell, a pico cell, or the like.

The base station may accommodate one or a plurality of (for example, three) cells. When the base station accommodates a plurality of cells, an entire coverage area of the base station may be divided into a plurality of smaller areas, and each smaller area may also provide a communication service by a base station subsystem (for example, a small base station for indoor use (remote radio head (RRH))). The term "cell" or "sector" refers to a part or the whole of a coverage area of at least one of a base station or a base station subsystem that performs communication service in this coverage.

In the present disclosure, terms such as "mobile station (MS)", "user terminal", "user equipment (UE)", and "terminal" can be used interchangeably.

The mobile station may also be referred to by those skilled in the art as a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable term.

At least one of the base station or the mobile station may be referred to as a transmission device, a reception device, a communication device, or the like. Note that at least one of the base station or the mobile station may be a device mounted on the mobile object, the mobile object itself, or the like. The moving object may be a vehicle (for example, a car, an airplane, or the like), a moving object moving unmanned (for example, a drone, an autonomous-driving vehicle, or the like), or a robot (manned type or unmanned type). Note that at least one of the base station or the mobile station includes a device that does not necessarily move during the communication operation. For example, at least one of the base station or the mobile station may be an Internet of Things (IoT) device such as a sensor.

In addition, the base station in the present disclosure may be read as a user terminal. For example, each aspect/embodiment of the present disclosure may be applied to a configuration in which communication between a base station and a user terminal is replaced with communication between a plurality of terminals 20 (for example, it may be referred to as device-to-device (D2D), vehicle-to-everything (V2X), or the like). In this case, the terminal 20 may have the function of the network node 30 described above. In addition, words such as "up" and "down" may be read as words corresponding to terminal-to-terminal communication (for example, "side"). For example, the uplink channel, the downlink channel, and the like may be replaced with side channels.

Similarly, the user terminal in the present disclosure may be read as a base station. In this case, the base station may have the function of the user terminal described above.

The term "determining" used in the present disclosure may encompass a wide variety of actions or operations. The term "determining" may include, for example, a case in which "judging", "calculating", "computing", "processing", "deriving", "investigating", "looking up, searching, inquiring" (for example, looking up in a table, a database, or another data structure), and "ascertaining" is deemed as "determining". Furthermore, "determining" may include a case in which "receiving" (for example, receiving information), "transmitting" (for example, transmitting information), "inputting", "outputting", or "accessing" (for example, accessing data in a memory) is deemed as "determining". Further, the "determining" may include a case in which "resolving", "selecting", "choosing", "establishing", "comparing", or the like is deemed as "determining" In other words, the "determining" may include a case in which a certain action or operation is deemed as "determining". Further, "determining" may be read as "assuming", "expecting", "considering", or the like.

The term "connected" or "coupled" or any variation thereof means any direct or indirect connection or coupling between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, two elements can be considered to be "connected" or "coupled" to each other using at least one of one or more wires, cables, or printed electrical connections and, as a number of non-limiting and noninclusive examples, electromagnetic energy having wavelengths in the radio frequency region, the microwave region, and the light (both visible and invisible) region.

The reference signal may be abbreviated as an RS (reference signal), or may be referred to as a pilot according to an applied standard.

As used in the present disclosure, the phrase "based on" does not mean "based only on" unless explicitly stated otherwise. In other words, the description "based on" means both "based only on" and "based at least on".

Any reference to elements using designations such as "first" and "second" as used in the present disclosure does not generally limit the amount or order of those elements. These designations may be used in the present disclosure as a convenient way to distinguish between two or more elements. Thus, references to first and second elements do not imply that only two elements may be employed or that the first element must in any way precede the second element.

The "means" in the configuration of each device described above may be replaced with a "unit", a "circuit", a "device", or the like.

Where the present disclosure uses the terms "include", "including", and variations thereof, these terms are intended to be inclusive in a manner similar to the term "comprising". Furthermore, the term "or" used in the present disclosure is intended not to be an exclusive OR.

In the present disclosure, for example, in a case where articles such as "a", "an", and "the" in English are added by translation, the present disclosure may include a case where a noun following these articles is a plural form.

In the present disclosure, the term "A and B are different" may mean "A and B are different from each other". Noted that the term may mean that "A and B are different from C". Terms such as "separated" and "coupled" may also be interpreted in the same manner as "different".

Each aspect/embodiment described in the present disclosure may be used alone, or may be used in combination, or may be switched with execution. Furthermore, notification of predetermined information (for example, notification of "being X") is not limited to being performed explicitly, and may be performed implicitly (for example, a notification of the predetermined information is not provided).

In the present disclosure, TSCAI is an example of the scheduling support information. The TSC traffic characteristics information are an example of the wireless-side scheduling information.

Although the present disclosure has been described in detail above, it is apparent to those skilled in the art that the present disclosure is not limited to the embodiments described in the present disclosure. The present disclosure can be implemented as modifications and variations without departing from the spirit and scope of the present disclosure defined by the claims. Therefore, the description of the present disclosure is for the purpose of illustration and does not have any restrictive meaning to the present disclosure.

This international patent application claims the priority based on Japanese Patent Application No. 2022-064002 filed on April 7, 2022, and the entire contents of Japanese Patent Application No. 2022-064002 are incorporated herein by reference.

### Reference Signs List

- 10: base station
- 110: transmitting unit
- 120: receiving unit
- 130: setting unit
- 140: control unit
- 20: terminal
- 210: transmitting unit
- 220: receiving unit
- 230: setting unit
- 240: control unit
- 30: network node
- 1001: processor
- 1002: storage device
- 1003: auxiliary storage device
- 1004: communication device
- 1005: input device
- 1006: output device

## Claims

1. A network node comprising:
a transmitting unit configured to transmit scheduling support information to an access and mobility management function (AMF); and
a receiving unit configured to receive, from the AMF, wireless-side scheduling information generated by a next generation Node B Distributed Unit (gNB-DU) based on the scheduling support information, wherein
the transmitting unit transmits the wireless-side scheduling information and information for identifying traffic to which the wireless-side scheduling information is applied to a transport network installed between a user plane function (UPF) and a next generation Node B-Central Unit-User Plane (gNB-CU-UP) in a data transmission path.

2. A network node comprising:
a transmitting unit configured to transmit scheduling support information to a next generation Node B Distributed Unit (gNB-DU); and
a receiving unit configured to receive wireless-side scheduling information generated by the gNB-DU based on the scheduling support information, wherein
the transmitting unit transmits schedule information based on the wireless-side scheduling information and information for identifying traffic to which the wireless-side scheduling information is applied to a transport network installed between the gNB-DU and a next generation Node B-Central Unit-User Plane (gNB-CU-UP) in a data transmission path.

3. A communication method performed by a network node, the communication method comprising:
a transmitting procedure of transmitting scheduling support information to an access and mobility management function (AMF);
a receiving procedure of receiving, from the AMF, wireless-side scheduling information generated by a next generation Node B Distributed Unit (gNB-DU) based on the scheduling support information; and
a transmitting procedure of transmitting the wireless-side scheduling information and information for identifying traffic to which the wireless-side scheduling information is applied to a transport network installed between a user plane function (UPF) and a next generation Node B-Central Unit-User Plane (gNB-CU-UP) in a data transmission path.
